# EUROPEAN PATENT SPECIFICATION

(11) **EP 0 627 891 B1**
(45) Date of publication and mention of the grant of the patent: **07.01.1998**
(21) Application number: 93905786.5
(22) Date of filing: 01.02.1993
(51) Int. Cl.: A47F 13/08, B65D 33/16, B65D 81/36, G01F 19/00

(54) **MULTIFUNCTIONAL DEVICE FOR RECEIVING AND DISPENSING A POURABLE PRODUCT AND CLOSING A FLEXIBLE BAG**
VORRICHTUNG ZUM AUFNEHMEN UND ABGEBEN EINES FLIESSFÄHIGEN PRODUKTES UND ZUM SCHLIESSEN EINES FLEXIBLEN BEUTELS
DISPOSITIF MULTIFONCTION SERVANT A RECEVOIR ET VERSER UN PRODUIT FLUIDE ET A FERMER UN SAC FLEXIBLE

(30) Priority: 03.02.1992 EP 92200308
(43) Date of publication of application: 14.12.1994
(73) Proprietor: THE PROCTER & GAMBLE COMPANY, Cincinnati, Ohio 45202 (US)
(72) Inventor: DUQUET, Jacky, Pierre, F-78580 Herbeville (FR)
(74) Representative: Engisch, Gautier
(86) International application number: US9300968
(87) International publication number: WO9314680

(56) References cited:
- EP-A- 0 053 390
- EP-A- 0 205 672
- DE-U- 8 205 384
- DE-U- 8 625 682
- FR-A- 1 193 023
- GB-A- 11 171
- US-A- 22 514
- US-A- 331 023
- US-A- 669 219
- US-A- 2 795 043
- US-A- 3 924 472
- US-A- 4 043 203

## Description

### Field of the invention

The present invention relates to a device useful in receiving, dispensing and measuring a pourable product which is contained in a flexible bag and the closing of the flexible bag with the device. In particular, the present invention relates to a closing means which is part of the device. The closing means is a constriction opening such as a recess of a slit, an orifice formed by a clip, or a groove which is capable of comprising and constricting that part of a flexible bag which is forming the product access opening in said flexible bag and thereby closes the flexible bag against the environment. The present invention further is directed towards the use of the device for closing a flexible bag in particular, a flexible bag containing granular products.

### Background of the invention

Bags containing pourable products are well known and often used in the art of packaging. For example, granular detergents are often packed in thin film plastic bags or paper bags. It also has become common to provide liquid or pourable granular products in plastic bags in order to reduce the amount of packaging material for environmental, technical or economical reasons. To access the products contained in such bags, they are usually opened by cutting away a corner or an edge of the bag. This however raises the problem of closure of the bag after taking out the desired amount of product at a particular time.

Products supplied in bags are usually not in the amount of a single portion. Therefore a device for receiving, dispensing and preferably measuring a portion of the product, like a scoop or a cup or a spoon, is required. The need for measuring the product amount has increased drastically since compact or ultra versions of many granular detergents but also of for example ground coffee are becoming increasingly popular. For simplicity this "device for receiving the product" hereinafter will be referred to as "scoop" even so a variety of other devices are known and may be used.

For convenience a scoop most often is included in or with each bag of product. The scoops used in this context usually also include a handle to manipulate the cavity in which product can be held. The lifetime of such scoops is usually not designed to be more than the usage time of the total amount of product contained in a single bag. However, due to the technical stability requirements, particularly for sticky or granular products, the material of which scoops are made, would allow to use them repetitively or for additional purposes.

Scoops having a tapered slit in their handle in order to attach them to a package, for example on a product bag, are known. This slit handle provides the user of the product with a convenient way to define the location of the scoop in order to easily find it for the next usage. However, this kind of slit handle lacks the ability to properly close a bag and in particular it lacks the ability to constrict and to comprise the part of the bag forming the product access opening in such a bag.

From German utility model DE-U-8625682.3 two piece clamps having a spring powered closing function and being integrated into the handle of a measuring scoop are known. This clamp handle has the drawback of high material and manufacturing cost due to its multipiece construction.

Also known are holes in the handle of scoops or small hooks attached to the handle in order to hang the scoop at a defined place for easy retrieving. Holes combined with a funnel are known from German utility model DE-U-8205384. They are designed to close a flexible bag by constricting and comprising flexible bag material in a similar fashion as the present invention. However these holes are difficult to use and unreliable in their closure function since they do not constrict the flexible bag sufficiently.

US-4,043,203 describes a measuring spoon attachable to a spoon holder. The spoon comprises an open ended slot to insert the spoon in the spoon holder. This slot, however, allows the spoon to freely pivot on the ring.

Therefore it is an objective of the present invention to provide a scoop with a handle providing in addition to the usual product receiving, dispensing and measuring function a closure means for a flexible bag. It is a particular objective to provide a closure means such that the part of the flexible bag which is forming the product access opening in such a bag is constricted and comprised together.

An additional objective of the present invention is to provide a scoop which is easy to be retrieved by using the scoop as part of the closing system for a flexible bag and thereby prevent its misplacing by the user.

Another objective of the present invention is to provide a closure system for otherwise unclosed flexible bags to protect sensitive products in such bags, particularly if the product is granular and hygroscopic and thereby likely to cake together.

A further objective of the present invention is to reduce the empty headspace in flexible bags by providing a closure means which can be employed to collapse the empty part of a flexible bag and close the bag directly above the product. Thereby the present invention improves the product protection and stability of the package since the product has no space to shift position in the flexible bag and is exposed to less air and oxygen since the headspace is minimized.

Yet another objective of the present invention is to provide a more ecological scoop material utilization by providing an additional use for the scoop. In addition, the present invention also can be executed with embodiments allowing to reduce the material consumption thereby combining the solution to a technical problem with an economical benefit.

### Brief description of the invention

The present invention relates to a scoop useful in receiving, and preferably also in measuring, a pourable product like, for example, granules or liquids. Pourable granules encompass a large variety of different materials like, for example, detergents, household cleaners, abrasives of all kinds, ground coffee, tea, milk powder, salt, sugar and others. The scoop of the present invention is useful for such products which are contained in a flexible bag. The present invention relates to a scoop which comprises a closing means useful in closing flexible bags containing pourable products. According to the present invention, the closing means is a constriction opening, such as, a recess of a slit, an orifice formed by a clip or a groove which is capable of comprising and constricting that part of a flexible bag which is forming the product access opening but excluding holes with an endless inner edge.

In another aspect, the present invention is directed towards the use of a multifunctional scoop as described above for closing a flexible bag and in particular for closing a flexible bag containing granular products.

### Brief description of the drawings

Figure 1 is a perspective view of a scoop according to the present invention incorporating a constriction opening in the handle.

Figure 2 is a perspective view of the scoop of Figure 1 while closing a flexible bag.

Figure 3 is a perspective view of an alternative embodiment of the scoop of the present invention incorporating a groove with a clamp.

Figure 4 is a perspective view of a scoop according to the present invention incorporating an alternative groove and clamp versus Figure 3.

Figure 5 is a perspective view of a flexible bag being closed by the scoop of Figure 3 or 4.

Figure 6 is a cut-away view of a scoop according to the present invention incorporating a clip on the handle.

Figure 7 is a top view of a scoop according to the present invention incorporating a clip integrated in the handle.

### Detailed description of the invention

The present invention is useful in receiving a pourable product. Pourable products can be liquids or granular solids which display semi-liquid flow characteristics under sheer forces. Granular products having been solidified by building interparticle connections also termed "caked", but which can easily be broken, for example by shaking of the product, are also included in the term "pourable product" as used herein. Pourable products are typically liquid or granular detergents, softeners, household cleaners, granular scouring material or food material like ground coffee, tea, milk powder, salt, sugar and the like.

Pourable products according to the invention are supplied to the user in quantities larger than is commonly necessary for a single use. For convenience and proper use, a device to receive, dispense and preferably to measure the product quantity is needed. Therefore product packages often include such a device. Typically this device for receiving and dispensing the product is a scoop, a cup, a spoon, a beaker or the like. The term "scoop" hereinafter therefore refers to the various devices known in the art and selected depending on the particular product and usage conditions for which the scoop is intended.

Scoops according to the present invention in addition to being useful for receiving pourable products, are capable of closing flexible bags in which such pourable products are packed. The term flexible bags for pourable products as used herein, refers to containers for pourable products which can be folded together or bulged together by hand without crushing or damaging the container material. Typically, such flexible bags are made of sheets, films or laminates of polymer, paper or metal material or combinations thereof. For example for flexible bags of granular detergents, the preferred bag materials are polyethylene, polypropylene or polyethylene film laminates. On the other hand, laminates of polymer or paper film together with metal film like aluminium foil are frequently used for example for ground coffee. The particular selection of a film material for such bags depends on the characteristics of the product to be packed as well as the expected conditions of handling by the manufacturer, distributor and user of the product.

According to the invention flexible bags are closed by use of a constriction opening which is comprised in the scoop. The constriction opening in the scoop can be provided in a number of ways. According to the invention for example slits with a recess, clips forming an orifice, grooves or combinations thereof which are capable of comprising and constricting that part of the flexible bag which forms the product access opening, are useful.

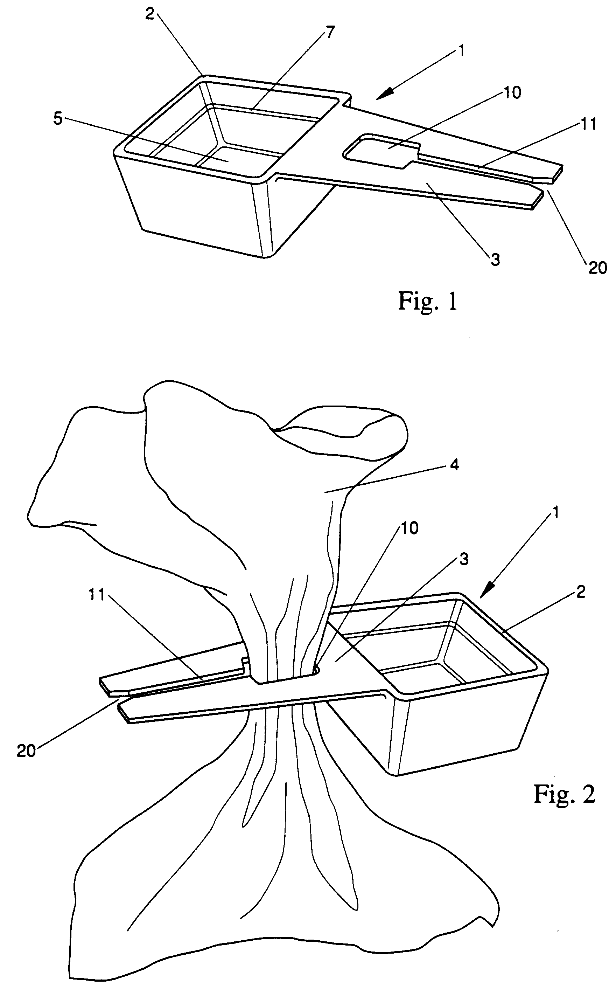

In Figure 1, a preferred embodiment of the scoop of the present invention is shown. The scoop (1) comprises a first part (2) having a cavity (5) for receiving a pourable product. The scoop (1) further comprises a handle (3) which is joined to the first part (2). As shown in Figure 1 the handle (3) is integral by being joined to the first part (2) to form the scoop (1) as a single piece. Other means of joining a handle (3) to the first part (2) of a scoop (1) are those well known in the art, for example welding, glueing, or mechanical attachment for example with screws. In a preferred embodiment of the present invention the handle (3) is made as an integral part of the first part (2) of the scoop(1) as shown in Figure 1. If the handle (3) is an integral part of the scoop (1), the handle (3) preferably is made of the same material as the first part (2).

The material of which a scoop can be made depends on its particular use. For example, scoops useful to receive ground coffee must not comprise compounds which are not compatible. On the other hand the material has to supply sufficient stability to allow scooping of pourable products which are caked together, for example detergent granules which have been exposed to high humidity. Preferred for scoops are polymer, particularly polyethylene, polypropylene, polystyrene, polyvinylchloride, acrylonitrilbutadienestyrene and polyethylene terephtalate. Alternative materials are metal or cardboard. As with the selection of the film material for flexible bags, the selection of material for the scoop depends on the characteristics of the product for which the scoop is to be used but in particular the material and the characteristics of the flexible bag itself.

Scoops made of polymer materials according to the present invention are preferably made by thermoforming from polymeric sheets or by injection moulding which are both well known in the art. Scoops made of metal can be deep-drawn or cupped and cardboard scoop may be made by folding of the board or by press-forming.

As shown in Figure 1 the first part (2) of the scoop (1) may further comprise measuring indicators like a dosing line (7). If the usage of the pourable product may require various amounts of product the scoop can also have more than one measuring indicator. Measuring indicators can be included in the present invention by continuous dosing lines all around or by gradiation lines. Alternatively for example subdividing the cavity into different compartments can be done. Preferred measuring indicators which are particularly useful with granular products are dosing lines, continuous or of limited length.

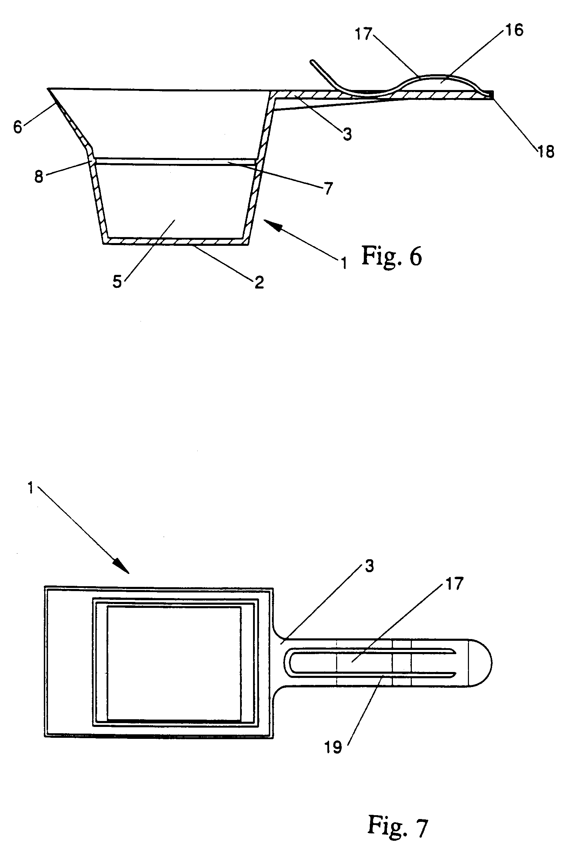

As shown in Figure 7 the first part (2) of the present invention may also comprise at the free end (6) of that side of the cavity (5) which is opposite the handle (3), a sharp edge(6). A sharp edge (6) is particularly useful for scraping out granular products which are caked together. In general the shape of the cavity (5) is not critical for the present invention. Any shape deemed to be appropriate for the designated use of the scoop(1) can be selected. For example round, oval, rectangular and square shapes have been found to work satisfactorily. It is preferred that the side walls of the cavity (5) are beveled such that the cross-section at the opening of the cavity (5) is larger than the cross-section at the bottom.

Figure 1 shows a preferred embodiment of the present invention. In this embodiment the scoop (1) comprises a constriction opening formed as a recess (10) in the handle (3). The handle further comprises a slit (11) which starts at its mouth (20) and ends in the recess (10). When using the scoop (1) to close a flexible bag (4) the mouth (20) is used to feed in the flexible bag material and pull it through the slit (11) such that it is constricted in the recess (10). Figure 2 shows a flexible bag (4) in which the scoop (1) of Figure 1 has been used to close the flexible bag (4) in the above described manner.

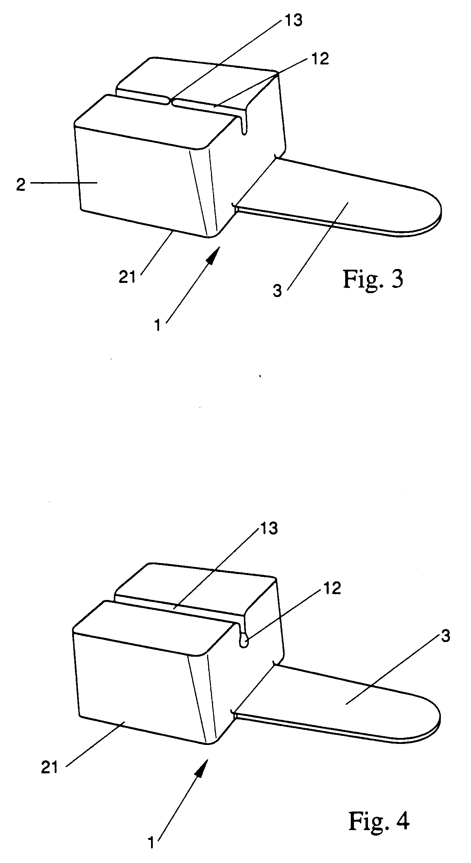

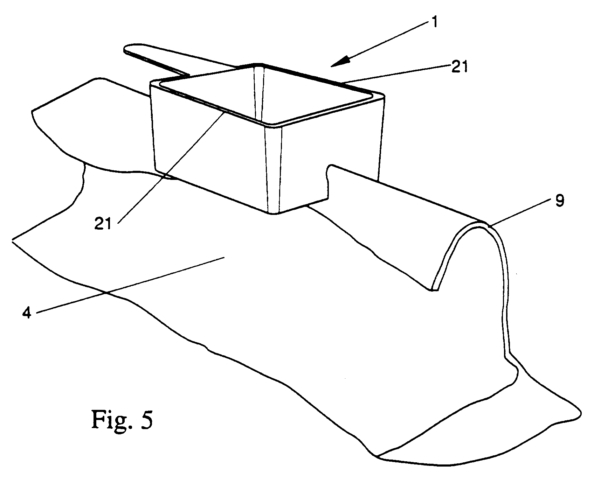

Figure 3 shows an alternative embodiment of the present invention. Again the scoop (1) comprises a first part (2) and a handle (3). The constriction opening in this embodiment is a groove (12) formed in the outside bottom of the first part (2). A groove (12) can also be formed in a side wall of the first part (2). A groove (12) as the constriction opening for closing flexible bags (4) can best be used by sliding it over an edge formed by the product access opening in a flexible bag. A preferred use of a groove (12) is shown in Figure 5 where the folded edge (9) of the product access opening of a flexible bag (4) is closed by the groove (12) in the bottom of a scoop (1). An alternative groove (12) is shown in Figure 4.

In Figure 3 and Figure 4 a preferred embodiment of the groove (12) is shown by having a clamp (13). The clamp (13a) of Figure 3 provides an additional constriction, clamping the flexible bag material together in a single point. The alternative clamp (13b) design shown in Figure 4 is effective along a line of the same length as the groove (12) by having its edges closer together than the center of the groove (12). Grooves (12) comprising a clamp (13) are also called clamp-grooves. They can be used in the same fashion as grooves (12) without clamp (13). However, it is preferred to press the side walls (21) of the first part (2) slightly together when putting the scoop (1) into its closing position, thereby increasing the clamp(13) opening and place the groove over a folded edge (9) formed by the product access opening of a flexible bag (4). Once the scoop (1) is in place to close a flexible bag (4), the side walls (21) are released thereby allowing the clamp (13) to secure and enhance the closure of the flexible bag (4).

If the product access opening of a flexible bag (4) has a length which cannot be properly closed by a groove (12) in the bottom of the first part (2) of a scoop (1) because that groove (12) would be too short, then an extension of the groove (12) into the handle (3) can be achieved by providing a handle (3) having the same height as the first part (2) of the scoop (1) such that the groove (12) extends along the bottom of the first part (2) into the handle (3). Many other alternatives for grooves (12) with or without clamps (13) are apparent to those skilled in the art. For example, the direction or the placement of the groove (12) need not be as shown in Figure 3 or 4. The particular dimension and design of the groove (12) will depend on the designated use of the scoop as well as the materials selected for the flexible bag and the scoop.

Figure 6 shows yet another preferred alternative of a constriction opening comprised in a scoop (1). The constriction opening (16) is formed as an orifice (16) by a clip (17) in the handle (3). The clip (17) can be formed of the handle material or it can be a separate piece which is attached to the handle. Figure 6 shows a clip (17) which is attached to the handle by a pin (18). Figure 7 shows the alternative attachment of a clip (17) to the handle (3) by providing a slit (19) in a U-form shape such that the clip (17) is formed as an integral part of the scoop (1). The orifice (16) in the clip (17) according to the present invention can be used in the same fashion as the groove (14) by placing the orifice (16) around the folded edge (9) of the product access opening of a flexible bag (4). Alternatively, it also can be used in the same fashion as the recess (10) with the slit (11) by forming a constricted area in a flexible bag (4) and putting the orifice (16) formed by the clip (17) around the bag constriction. In both alternative uses the clip (17) in addition forming the orifice (16) provides a clamping force which holds the scoop (1) in place and improves the tightness of the closure. The particular shape and dimension of a clip (17) depend on the designated use of the clip as well as the materials selected for the flexible bag, the scoop and the clip itself.

## Claims

1. A scoop (1) for receiving and dispensing a pourable product and closing a flexible bag (4) containing said pourable product, said scoop (1) comprising
- a first part (2) having a cavity (5) for receiving and dispensing of said pourable product
- a handle (3) joined to said first part (2) to manipulate said cavity (5) during receiving and dispensing of said pourable product
- a constriction opening (10,12,16) to close said flexible bag (4) by constricting that part of said flexible bag which is forming the product access opening in said flexible bag (4), characterized in that the constricting opening is a slit (11) which starts at its mouth and ends in the recess (10) or a clip (17) forming an orifice (16) or a groove (12) or a combination thereof.

2. A scoop (1) according to claim 1 characterized in that said groove (12) comprises a clamp (13).

3. A scoop (1) according to either of the preceding claims characterized in that said handle (3) comprises said constriction opening (10,12,16).

4. A scoop (1) according to any of the preceding claims characterized in that said cavity (5) comprises dosing lines (7), the free end (8) of the side of said cavity (5) opposite said handle (3) forms a sharp edge (6) and said scoop (1) is made of polyethylene terephtalate or combinations thereof.

5. Use of the scoop (1) of Claim 1 to close a flexible bag (4).

6. Use of a scoop (1) according to claim 5, characterized in that said product access opening of said flexible bag (4) is closed by pulling the material forming said product access opening into said constriction opening (10,12,16) of said scoop (1).

7. Use of a scoop (1) according to claim 5 or 6, characterized in that said scoop (1) comprises a groove (12) and a clamp (13) to close a flexible bag (4) by folding the product access opening of said flexible bag (4) onto itself to form a folded edge (9), increasing the clamp (13) opening by pressing the side walls (21) of the first part (2) together and sliding said groove (12) over the folded edge (9).

8. Use of a scoop (1) according to claim 5 or 6, characterized in that said scoop (1) comprises an orifice (16) formed by a clip (17) to close a flexible bag (4) by folding the product access opening of said flexible bag (4) onto itself to form a folded edge (9) and placing the orifice (16) around the folded edge (9).

9. Use of a scoop (1) according to claim 5,6,7 or 8, characterized in that said flexible bag (4) is made of a film selected from polymer films, paper, metal films or combinations thereof.

## Patentansprüche

1. Portionierer (1) zur Aufnahme und Verteilung eines schüttbaren Produkts, sowie zum Verschließen einer das schüttbare Produkt enthaltenden flexiblen Tasche (4), mit :
- einem einen Hohlraum (5) aufweisenden ersten Teil (2) zur Aufnahme und Verteilung des schüttbaren Produkts;
- einem mit dem ersten Teil (2) verbundenen Griff (3) zur Handhabung des Hohlraums (5) während der Aufnahme und der Verteilung des schüttbaren Produkts; und
- einer Kontraktionsöffnung (10,12,16) zum Verschließen der flexiblen Tasche (4), indem der Teil der flexiblen Tasche verengt wird, der die Produktzugangsöffnung der flexiblen Tasche (4) darstellt, **dadurch gekennzeichnet**, daß die Kontraktionsöffnung als ein an seinem Mund beginnender und in einer Ausnehmung (10) endender Schlitz (11), als eine eine Öffnung (16) bildende Klammer (17), als Rille (12) oder als Kombination davon ausgebildet ist.

2. Portionierer (1) nach Anspruch 1, **dadurch gekennzeichnet**, daß die Rille (12) eine Klemme (13) enthält.

3. Portionierer (1) nach beiden vorangeganenen Ansprüchen, **dadurch gekennzeichnet**, daß der Griff (3) die Kontraktionsöffnung (10,12,16) enthält.

4. Portionierer (1) nach irgendeinem der vorangeganenen Ansprüche, **dadurch gekennzeichnet**, daß der Hohlraum (5) Dosierlinien (7) enthält, wobei das freie Ende (8) der dem Griff (3) gegenüberliegenden Seite des Hohlraums (5) eine scharfe Kante (6) bildet, und der Portionierer (1) aus Poyethylen, Terephtalat oder einer Kombination davon gebildet ist.

5. Verwendung des Portionierers (1) nach Anspruch 1, um eine flexible Tasche (4) zu verschließen.

6. Verwendung des Portionierers (1) nach Anspruch 5, **dadurch gekennzeichnet**, daß die Produktzugangsöffnung der flexiblen Tasche (4) verschlossen wird, indem das die Produktzugangsöffnung bildende Material in die Kontraktionsöffnung (10,12,16) des Portionierers (1) gezogen wird.

7. Verwendung des Portionierers (1) nach Anspruch 5 oder 6, **dadurch gekennzeichnet**, daß der Portionierer (1) eine Rille (12) und eine Klemme (13) enthält, um die flexible Tasche (4) zu verschließen, indem die Produktzugangsöffnung der flexiblen Tasche (4) zur Bildung einer gefalteten Kante (9) mit sich selbst gefaltet die Öffnung der Klemme (13) durch zusammendrücken der Seitenwände (21) des ersten Teils (2) vergrößert und die Rille (12) über die gefaltetet Kante (9) gesteckt wird.

8. Verwendung des Portionierers (1) nach Anspruch 5 oder 6, **dadurch gekennzeichnet**, daß der Portionierer (1) eine durch eine Klammer (17) gebildete Öffnung (16) enthält, um eine flexible Tasche (4) zu verschließen, indem zur Bildung einer gefalteten Kante (9) die Produktzugangsöffnung der flexiblen Tache (4) mit sich selbst gefaltet und die Öffnung (16) um die gefaltete Kante (9) angeordnet wird.

9. Verwendung des Portionierers ( 1) nach Anspruch 5,6,7 oder 8, **dadurch gekennzeichnet**, daß die flexible Tasche (4) aus einer dünnen Schicht bestehend aus Polymerschichten, Papier, Metallschichten oder Kombinationen davon gebildet ist.

## Revendications

1. Petite pelle (1) pour recevoir et distribuer un produit susceptible d'être versé et pour fermer un sac souple (4) renfermant ledit produit susceptible d'être versé, ladite petite pelle (1) comprenant:
- une première partie (2) ayant un logement formant cavité (5) pour recevoir et distribuer ledit produit susceptible d'être versé,
- une poignée (3) réunie à ladite première partie (2) pour manipuler ledit logement formant cavité (5) au cours de la réception et de la distribution dudit produit susceptible d'être versé,
- une ouverture d'étranglement (10, 12, 16) pour fermer ledit sac souple (4) en resserrant la partie dudit sac souple qui forme l'ouverture d'accès au produit dans ledit sac souple (4), caractérisée en ce que l'ouverture d'étranglement est une fente (11) qui commence à son embouchure et qui se termine dans l'évidement (10) ou un collier de serrage (17) formant un orifice (16) ou une rainure (12) ou une combinaison de ceux-ci.

2. Petite pelle (1) selon la revendication 1, caractérisée en ce que ladite rainure (12) comporte une pince (13).

3. Petite pelle (1) selon l'une quelconque des revendications précédentes, caractérisée en ce que ladite poignée (3) renferme ladite ouverture d'étranglement (10, 12, 16).

4. Petite pelle (1) selon l'une quelconque des revendications précédentes, caractérisée en ce que ledit logement formant cavité (5) comporte des lignes de dosage (7), et en ce que l'extrémité libre (8) de la paroi dudit logement formant cavité (5), opposée à ladite poignée (3), forme un bord vif (6) et ladite petite pelle (1) est réalisée en polyéthylène téréphtalate ou à partir de ses combinaisons.

5. Utilisation d'une petite pelle (1) selon la revendication 1 pour fermer un sac souple (4).

6. Utilisation d'une petite pelle (1) selon la revendication 5, caractérisée en ce que ladite ouverture d'accès au produit contenu dans ledit sac souple (4) est fermée en tirant le matériau formant ladite ouverture d'accès au produit dans ladite ouverture d'étranglement (10, 12, 16) de ladite petite pelle (1).

7. Utilisation d'une petite pelle (1) selon la revendication 5 ou 6, caractérisée en ce que ladite petite pelle (1) comporte une rainure (12) et une pince (13) pour fermer un sac souple (4) en repliant l'ouverture d'accès au produit dudit sac souple (4) sur elle-même pour former un bord replié (9); en élargissant l'ouverture de la pince (13) en comprimant les parois latérales (21) de la première partie (2) tout en faisant glisser ladite rainure (12) sur le bord replié (9).

8. Utilisation d'une petite pelle (1) selon la revendication 5 ou 6, caractérisée en ce que ladite petite pelle (1) comporte un orifice (16) formé par un collier de serrage (17) pour fermer un sac souple (4) en repliant l'ouverture d'accès au produit dudit sac souple (4) sur elle-même pour former un bord replié (9) et en disposant l'orifice (16) autour du bord replié (9).

9. Utilisation d'une petite pelle (1) selon les revendications 5, 6, 7 ou 8 caractérisée en ce que ledit sac souple (4) est réalisé à l'aide d'un film choisi parmi les films polymères, le papier, les films métalliques, ou leurs combinaisons.
